# EUROPEAN PATENT APPLICATION

(11) **EP 4 481 884 A1**
(43) Date of publication of application: **25.12.2024**
(21) Application number: 23756034.7
(22) Date of filing: 10.01.2023
(51) Int. Cl.: H01M 10/42, H01M 10/44, H01M 10/48

(54) **SECONDARY BATTERY CONTROL DEVICE AND SECONDARY BATTERY SYSTEM**

(30) Priority: 18.02.2022 JP 2022023801
(71) Applicant: Hitachi, Ltd., Tokyo 100-8280 (JP)
(72) Inventor: ITO Shota, Tokyo 100-8280 (JP); KOMATSU Daiki, Tokyo 100-8280 (JP); HONKURA Kohei, Tokyo 100-8280 (JP); KAWAJI Jun, Tokyo 100-8280 (JP)
(74) Representative: Mewburn Ellis LLP
(86) International application number: PCT/JP2023/000253
(87) International publication number: WO 2023/157506

(57) **Abstract**

Provided is a secondary battery control device that can properly recover the capacity of a secondary battery. The secondary battery control device includes: a calculation unit (404) having a function of acquiring a positive electrode potential characteristic and a negative electrode potential characteristic of a battery cell included in the secondary battery, based on an open circuit voltage characteristic of the battery cell, a function of acquiring a remaining discharge capacity ranging from a current negative electrode potential to a discharge end potential, based on the negative electrode potential characteristic, and a function of determining a discharge electricity amount that is an amount of electricity to be discharged, based on the remaining discharge capacity; and a discharge control unit (412) that causes the secondary battery to discharge electricity in an amount equal to the discharge electricity amount.

## Description

### Technical Field

The present invention relates to a secondary battery control device and a secondary battery system.

### Background Art

In Abstract of PTL 1 cited below, a technique is described as a background art in this technical field as follows. "An ECU960 executes capacity recovery control of recovering the capacity of a battery pack 10 by controlling a PCU920. The capacity recovery control includes a discharge mode and a capacity recovery mode. In the discharge mode, the ECU960 causes the battery pack 10 to discharge up to a given overdischarge area. In the capacity recovery mode, the ECU960 repeatedly executes, in the overdischarge area, a voltage raising process of raising the voltage of a lithium ion secondary battery by stopping the discharge and a pulse discharge process of causing the lithium ion secondary battery to discharge while causing a discharge current to oscillate".

Paragraph 0080 of the specification of PTL 2 cited below provides the following description: "As described above, according to the present invention, the status of the charge/discharge curve of the whole positive electrode and the charge/discharge curve of the whole negative electrode inside the secondary battery can be known in a non-destructive manner. Thus, the cause of battery degradation can be identified in a non-destructive manner, which allows highly accurate service life determination. Furthermore, according to the present invention, by applying reproduction calculation results, an appropriate use range of a degraded battery can be determined with high accuracy or a decrement of charge/discharge reaction species can be acquired in a non-destructive manner". These descriptions in the patent literatures are included in the present specification as part thereof.

### Citation List

### Patent Literature

PTL 1: JP 2019-106333 A
PTL 2: JP 4884404 B2

### Summary of Invention

### Technical Problem

Now, the above-described techniques involve a demand that the capacity of the secondary battery be recovered more properly.

The present invention has been conceived in view of the above circumstances, and it is therefore an object of the invention to provide a secondary battery control device and a secondary battery system that can properly recover the capacity of a secondary battery.

### Solution to Problem

In order to solve the above problem, a secondary battery control device according to the present invention includes: a calculation unit having a function of acquiring a positive electrode potential characteristic and a negative electrode potential characteristic of a battery cell included in a secondary battery, based on an open circuit voltage characteristic of the battery cell, a function of acquiring a remaining discharge capacity ranging from a current negative electrode potential to a discharge end potential, based on the negative electrode potential characteristic, and a function of determining a discharge electricity amount that is an amount of electricity to be discharged, based on the remaining discharge capacity; and a discharge control unit that causes the secondary battery to discharge electricity in an amount equal to the discharge electricity amount.

### Advantageous Effects of Invention

According to the present invention, the capacity of the secondary battery can be recovered properly.

### Brief Description of Drawings

[FIG. 1] FIG. 1 is a schematic sectional view of a bipolar battery cell.
[FIG. 2] FIG. 2 is a schematic side view of a power storage element.
[FIG. 3] FIG. 3 is a schematic block diagram showing a configuration of a battery module.
[FIG. 4] FIG. 4 is a schematic block diagram showing a configuration of a battery pack.
[FIG. 5] FIG. 5 is a block diagram conceptually showing an example of a control device.
[FIG. 6] FIG. 6 is a block diagram of a computer included in a control unit.
[FIG. 7] FIG. 7 is a block diagram showing functions of the control unit.
[FIG. 8] FIG. 8 is a flowchart of a capacity recovery control routine.
[FIG. 9] FIG. 9 is a diagram showing an example of OCV characteristic of a battery cell.
[FIG. 10] FIG. 10 is an enlarged view of a principle part of FIG. 9.
[FIG. 11] FIG. 11 is a diagram showing an example of potential characteristic and the like of a battery cell.
[FIG. 12] FIG. 12 is a diagram showing an example of an estimated negative electrode potential characteristic.
[FIG. 13] FIG. 13 is another diagram showing an example of the potential characteristic and the like of the battery cell.
[FIG. 14] FIG. 14 is a table showing capacity recovery rates in an example and various comparative examples.

### Description of Embodiments

### [Summary of Embodiment]

A lithium ion battery is one of nonaqueous electrolyte secondary batteries and has a high energy density. Because of these features, the lithium ion battery is used as a battery for portable devices and recently as a battery for mobile bodies, such as an electric car, a railroad car, and a ship. It is known, however, that the lithium ion battery degrades in the course of use and its battery capacity reduces as a consequence.

In the lithium ion battery, in general, a lithium metal oxide is used as an active material of a positive electrode and a carbon material, such as graphite, is used as an active material of a negative electrode. The positive electrode and the negative electrode of the lithium ion battery are each formed by adding a binder, a conductive agent, and the like to a group of minute active material particles to turn them into a slurry and then applying the slurry to a metal foil.

Inside the lithium ion battery, lithium ions released from the active material of the positive electrode are occluded into the active material of the negative electrode during charging, whereas lithium ions occluded in the active material of the negative electrode are released therefrom and are occluded into the active material of the positive electrode during discharging. In this manner, lithium ions' migrating between the electrodes creates a current flow between the electrodes of an external circuit.

Such a lithium ion battery undergoes a reduction in its capacity because of the following phenomena.
(1) The active material of the positive electrode is electrically isolated.
(2) The active material of the negative electrode is electrically isolated.
(3) Lithium ions migrating between the electrodes are fixed.

The phenomenon (3) occurs in a case where as an electrolytic solution decomposes, lithium ions deposit on the negative electrode surface to form a film or are trapped in the negative electrode. A portion of the capacity reduced as a result of lithium ions' being trapped in the negative electrode, however, can be recovered by an electrochemical treatment. For example, by raising the potential of the negative electrode to a potential above a normal service voltage range, lithium ions trapped in the negative electrode are released, which results in recovery of the capacity. This is equivalent to causing the battery to overdischarge, and means lowering a charging rate (a state of charge or SOC) of the battery, which is defined by a service voltage range of the battery, below 0%.

When the battery is caused to overdischarge, it is preferable that an upper limit discharge capacity (recovery upper limit capacity) be obtained and that the recovery upper limit capacity be multiplied by a given safety rate to determine a discharge amount. Therefore, in an embodiment that will be described later, the recovery upper limit capacity at the time of the batteries' overdischarging is calculated, and the discharge amount is determined based on the calculated recovery upper limit capacity.

The minimum constituent unit of a secondary battery pack is called a "cell". In other words, a cell is a secondary battery including a positive electrode, a negative electrode, and an electrolyte. When the secondary battery pack is composed of a plurality of cells connected in series or in parallel, cells different in degree of degradation are present together. In other words, a cell with a large degree of deterioration and a cell with a small degree of degradation are present together. In such a secondary battery pack, if a cell with a small degree of degradation is caused to overdischarge, it may result in degradation of materials of the positive and negative electrodes of the cell or lead to faster decomposition of the electrolytic solution, and therefore may end up in accelerated degradation of the cell. Therefore, in the embodiment that will be described later, an optimum overdischarge condition for the whole secondary battery pack is determined as overdischarging by the cell with a small degree of degradation is suppressed.

### [Structure of Battery Cell]

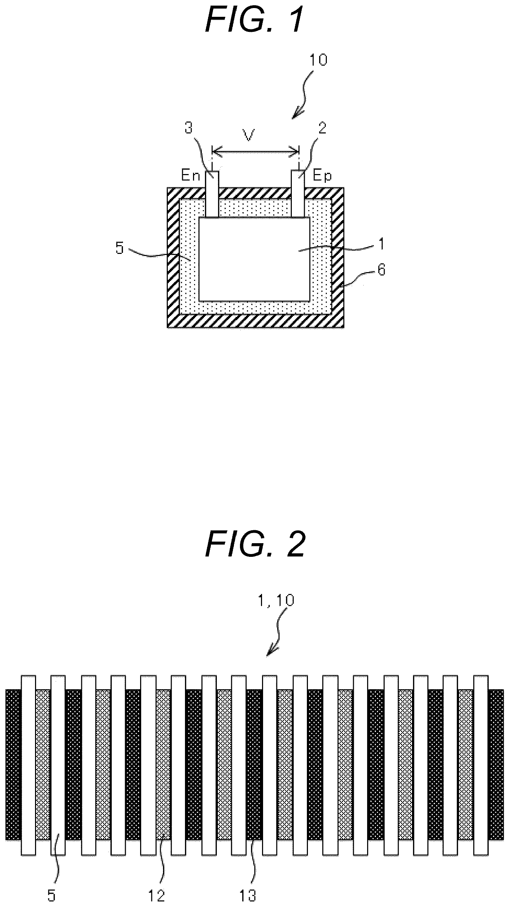

An exemplary structure of a bipolar battery cell applicable to an embodiment will first be described with reference to FIGS. 1 and 2.

FIG. 1 is a schematic sectional view of a bipolar battery cell 10.

In FIG. 1, the battery cell 10, which is a lithium ion battery cell, includes a power storage element 1, a positive electrode terminal 2, a negative electrode terminal 3, and a sheath material 6. A separator 5 is included in the power storage element 1. The sheath material 6 is made of a laminate film or a material similar thereto. The shape of the battery cell 10 is not limited to a square shape as shown in FIG. 1. The battery cell 10 may be of a cylindrical shape (not illustrated).

FIG. 2 is a schematic side view of the power storage element 1.

As shown in FIG. 2, in the power storage element 1, a plurality of positive electrodes 12 and negative electrodes 13 are alternately stacked with the separator 5 interposed therebetween. The power storage element 1 shown in FIG. 1 corresponds to an area where a stack of the positive electrode 12 and negative electrode 13 are observed. The structure of the power storage element 1 is not limited to the stack type as shown in FIG. 2. The power storage element 1 may be of a rolled type, which is, although not illustrated, constructed by stacking the positive electrodes 12 and negative electrodes 13 such that they face each other across the separator 5 interposed therebetween and rolling up the stack of positive electrodes 12, negative electrodes 13, and separator 5. The power storage element 1 further includes an electrolytic solution (not illustrated), which is impregnated into the positive electrode 12, the negative electrode 13, and the separator 5 through their micropores. As the separator 5, for example, a polypropylene film can be used. As the separator 5, however, a material other than polypropylene, such as a microporous film made of polyolefin, e.g., a polyethylene film, or a nonwoven fabric may also be used.

The positive electrode 12 and the negative electrode 13 are each prepared by applying a mixture of an electrode active material, a conductive agent, a binder, etc., which are properly adopted, to a metal current collector foil, which is properly adopted. A metal tab is connected to respective current collector foils of the positive electrode 12 and the negative electrode 13. The sheath material 6 is sealed such that only the tabs are exposed outside the sheath material 6. Hence the tabs serve as a positive electrode terminal 2 and a negative electrode terminal 3, as shown in FIG. 1. Hereinafter, a potential of the positive electrode 12 and that of the negative electrode 13 will be referred to as a positive electrode potential Ep and a negative electrode potential En, respectively. A difference between the positive electrode potential Ep and the negative electrode potential En, i.e., "Ep - En" is a voltage between the positive electrode 2 and the negative electrode 3, and this voltage is referred to as a cell voltage V.

As the current collector foil of the positive electrode 12, an aluminum foil of 10 um to100 um in thickness, an aluminum perforated foil of 10 um to 100 um in thickness and 0.1 mm to 10 mm in pore diameter, an expanded metal, a foamed metal plate, or the like is used. In addition to aluminum, stainless steel, titanium, or the like may also be used as the material of the current collector foil. In this embodiment, a current collector of any given type can be used without being limited by requirements for a material, a shape, a manufacturing method, etc.

It is preferable that the electrode active material of the positive electrode 12 contain reactive species. The reactive species of the lithium ion battery are lithium ions. In this case, the electrode active material of the positive electrode 12 contains a lithium-containing compound capable of capturing/releasing lithium ions reversibly. The electrode active material of the positive electrode 12 is not limited to a particular type of material. For example, lithium transition metal phosphates (Li_{w}NiₓCo_{y}Mn_{z}O₂ where w, x, y, and z each denote 0 or a positive value), such as lithium cobaltate, manganese-substituted lithium cobaltate, lithium manganate, lithium nickelate, and olivine type lithium iron phosphate, are cited as electrode active materials. The electrode active material of the positive electrode 12 may contain only one of the above materials or two or more of them.

As the current collector foil of the negative electrode 13, a copper foil of 10 um to100 um in thickness, a copper perforated foil of 10 um to 100 um in thickness and 0.1 mm to 10 mm in pore diameter, an expanded metal, a foamed metal plate, or the like is used. In addition to copper, stainless steel, titanium, or the like may also be used as the material of the current collector foil. In this embodiment, a current collector of any given type can be used without being limited by requirements for a material, a shape, a manufacturing method, etc.

The electrode active material of the negative electrode 13 contains a material capable of capturing/releasing lithium ions reversibly. The electrode active material of the negative electrode 13 is not limited to a particular type of material. For example, natural graphite, a composite carbonaceous material made by forming a film on natural graphite by a dry CVD method or a wet spraying method, artificial graphite produced by backing such a raw material as a resin like epoxy or phenol or a pitch-based material extracted from petroleum or coal, silicon (Si), graphite with silicon added thereto, a non-graphitizable carbon material, lithium titanate (Li₄Ti₅O₁₂), niobium titanium-based oxide (TiNb₂O₇), or the like can be used as the electrode active material. The electrode active material of the negative electrode may contain only one of the above materials or two or more of them.

The power storage element 1 is impregnated with the electrolytic solution. The electrolytic solution is not limited to a particular type of solution. In the case of the lithium ion battery, for example, an aprotic organic solvent, such as ethylene carbonate (EC), propylene carbonate (PC), butylene carbonate (BC), dimethyl carbonate (DMC), ethyl methyl carbonate (EMC), diethyl carbonate (DEC), methyl propyl carbonate (MPC), or ethyl propyl carbonate (EPC), can be used as the electrolytic solution.

The electrolytic solution may be prepared by dissolving a lithium salt, such as lithium hexafluorophosphate, lithium tetrafluoroborate, lithium perchlorate, lithium iodide, lithium chloride, lithium bromide, LiB [OCOCF₃]₄, LiB[OCOCF2CF₃]₄, LiPF₄(CF₃)₂, LiN(SO₃CF₃)₂, and LiN (SO₂CF₃CF₃)₂, or a mixed lithium salt composed of two or more of these substances, in a solvent composed of a mixture of two or more of the above organic compounds.

A solid electrolyte may be used in place of the electrolytic solution. The solid electrolyte is not limited to a particular substance. For example, ion conductive polymers, such as polyethylene oxide, polyacrylonitrile, polyvinylidene fluoride, polymethyl methacrylate, polyhexafluoropropylene, and polyethylene oxide, are cited as solid electrolytes. When one of these solid polymer electrolytes is used, the separator 5 can be omitted.

### [Configuration of Embodiment]

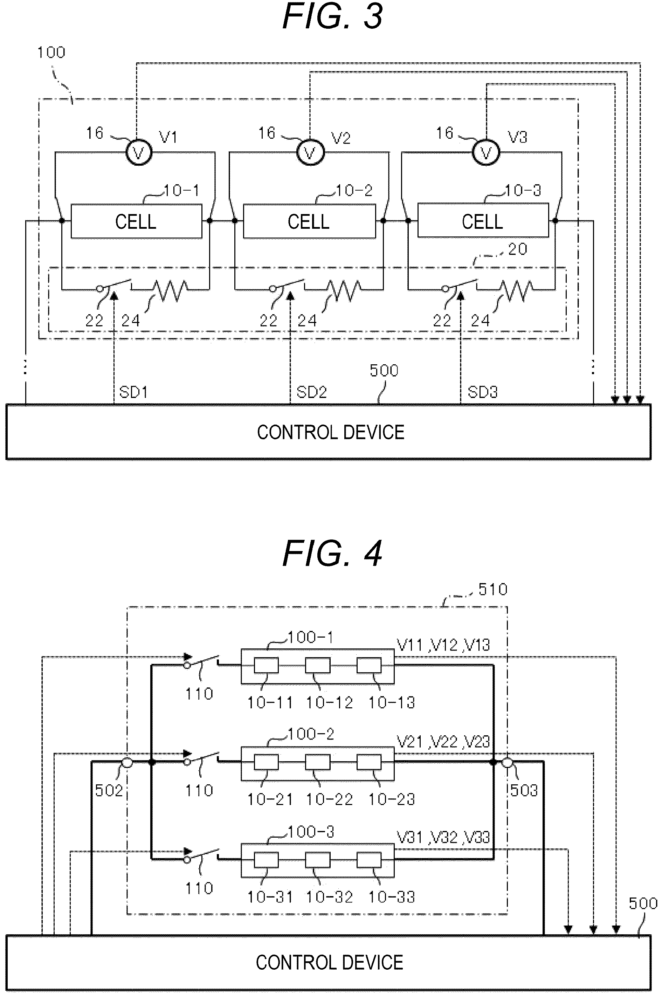

FIG. 3 is a schematic block diagram showing a configuration of a battery module 100 (secondary battery) applied to this embodiment.

In FIG. 3, the battery module 100 includes three battery cells 10-1,10-2, and 10-3 connected in series, three voltage sensors 16, and a balancing circuit 20. The three battery cells 10-1 to 1 to 10-3 are each equal to the battery cell 10 shown in FIG. 1. Hereinafter, the battery cells 10-1 to 10-3 may be collectively referred to as "battery cell 10". The three voltage sensors 16 output results of measurement of cell voltages V1, V2, and V3 of the battery cells 10-1 to 10-3.

The balancing circuit 20 includes three switches 22 and three resistors 24 connected in series to the switches 22, respectively. A series circuit composed of each switch 22 and each resistor 24 is connected in parallel to each of the battery cells 10-1 to 10-3. The battery module 100 outputs results of measurement of the cell voltages V1 to V3 to a control device 500 (secondary battery control device).

On/off states of the switches 22 are controlled respectively, based on control signals SD1, SD2, and SD3 supplied from the control device 500. Based on results of measurement of the cell voltages V1 to V3, the control device 500 outputs the control signals SD1, SD2, and SD3 in such a way as to reduce a difference between the cell voltages V1 to V3, thus causing a battery cell 10 with a high voltage to discharge.

In the following description, a "battery cell" and a "battery module" may be simply referred to as a "cell" and a "module", respectively. In the example shown in FIG. 3, one battery module 100 includes three battery cells 10. However, the number of battery cells 10 included in one battery module 100 may be any given number that is equal to or larger than 1.

In the example of FIG. 3, for simpler description, a passive type balancing circuit including the switches 22 and the resistors 24 is shown as the balancing circuit 20. However, an active type balancing circuit (not illustrated) may be adopted as the balancing circuit 20. In other words, a balancing circuit in which a cell with a low cell voltage is charged with electric charges from a cell with a high cell voltage may be adopted.

FIG. 4 is a schematic block diagram showing a configuration of a battery pack 510 (secondary battery) applied to this embodiment.

In FIG. 4, the battery pack 510 includes a positive electrode terminal 502, a negative electrode terminal 503, three battery modules 100-1,100-2,100-3, and three switches 110. The battery modules 100-1 to 100-3 are each equal to the battery module 100 shown in FIG. 3. For this reason, the battery modules 100-1 to 100-3 may be collectively referred to as a "battery module 100".

Each switch 110 is set on-state or off-state, based on a command supplied from the control device 500. When all switches 110 are set on-state, the battery modules 100-1 to 100-3 are connected in parallel between the positive electrode terminal 502 and the negative electrode terminal 503 of the battery pack 510. Sets of three battery cells 10 included respectively in three battery modules 100-1 to 100-3 are referred to as battery cells 10-11,10-12,10-13,10-21,10-22,10-23,10-31,10-32, and 10-33.

The battery pack 510 informs the control device 500 of results of measurement of cell voltages V11,V12,V13,V21,V22,V23,V31,V32, and V33 of these battery cells. In addition, as described above, the control device 500 controls the on/off states of the plurality of switches 110. The control device 500 is thus able to control a current flow in accordance with a degree of degradation of each battery module 100.

It should be noted, however, that the switches 110 are not essential components and therefore may be omitted. In other words, the battery modules 100-1 to 100-3 may be connected in parallel between the positive electrode terminal 502 and the negative electrode terminal 503, with no switches 110 provided. Omitting the switches 110 reduces the cost thereof and reduces power loss resulting from the on-resistance of the switches 110 as well. In the example shown in FIG. 4, the battery pack 510 includes three battery modules 100-1 to 100-3. The number of battery modules 100 included in the battery pack 510 is, however, not limited to a particular number. For example, the battery pack 510 may include one battery module 100 only. In addition, the battery pack 510 may include a voltage sensor and a current sensor that measure the voltage and current of each of the battery modules 100-1 to 100-3 or may include a thermometer that measures the internal temperature of the battery pack 510.

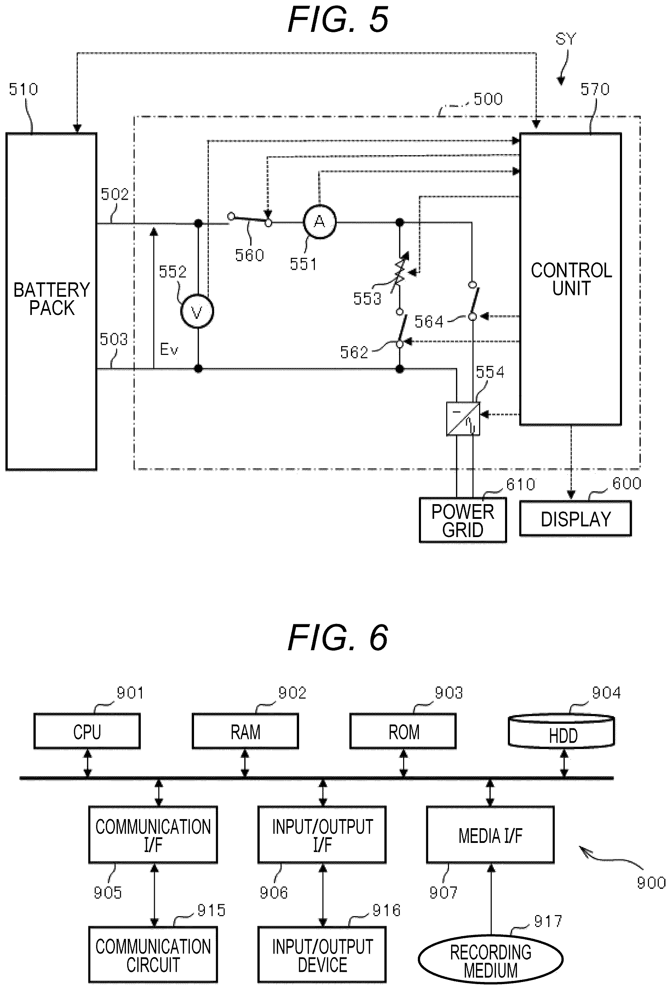

FIG. 5 is a block diagram showing a configuration of a secondary battery system SY according to a first embodiment.

In FIG. 5, the secondary battery system SY includes the battery pack 510 (secondary battery) and the control device 500 (secondary battery control device). The battery pack 510 is connected to the control device 500 via the positive electrode terminal 502 and the negative electrode terminal 503.

The control device 500 includes an ammeter 551, a voltmeter 552, a variable resistance 553, a power converter 554, switches 560,562, and 564, and a control unit 570. The power converter 554 converts DC power discharged from the battery pack 510, into AC power and supplies the AC power to a power grid 610. In addition, the power converter 554 converts AC power supplied from the power grid 610, into DC power to charge the battery pack 510 with the DC power. Results of measurement of the cell voltages V11 to V33 (see FIG. 4) in the battery pack 510 are supplied to the control unit 570. Furthermore, measurement results from the ammeter 551 and the voltmeter 552 too are supplied to the control unit 570. These measurement results are a current value of a charge/discharge current flowing through the battery pack 510 and a battery voltage Ev.

Based on such various input data, the control unit 570 outputs control signals to the switches 560,562, and 564, the variable resistance 553, and the power converter 554. The control unit 570 outputs also various image data to a display 600, which is an external unit. It should be noted that the configuration of the control device 500 is not limited to the configuration shown FIG. 5 and that various circuit configurations in which in input current to the battery pack 510 can be controlled based on an input signal from the battery pack 510 can be adopted.

FIG. 6 is a block diagram of a computer 900 included in the control unit 570.

In FIG. 6, the computer 900 includes a CPU901, a RAM902, a ROM903, an HDD904, a communication interface (I/F) 905, an input/output I/F906, and a media I/F907. The communication I/F905 is connected to a communication circuit 915, which is an external unit. The input/output I/F906 is connected to an input/output device 916. The media I/F907 reads and writes data from and to a recording medium 917. The ROM903 stores a control program executed by the CPU, various data, and the like. The CPU901 executes application programs loaded onto the RAM902, thereby implementing various functions.

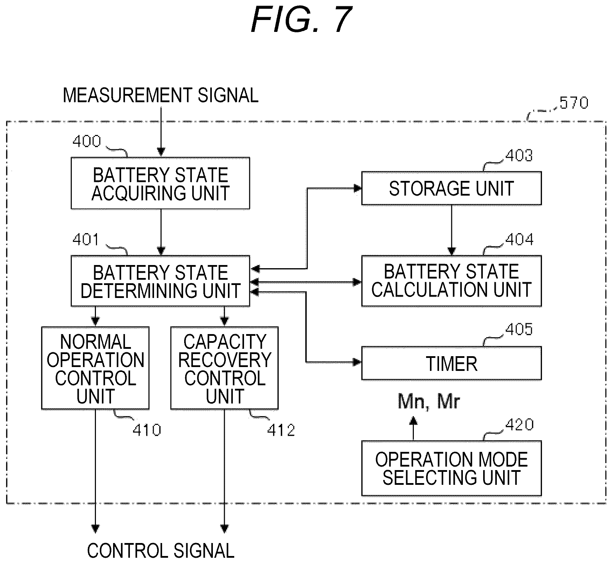

FIG. 7 is a block diagram showing functions of the control unit 570. Blocks in the diagram represent functions implemented by application programs or the like.

The control unit 570 includes a battery state acquiring unit 400, a battery state determining unit 401, a storage unit 403, a battery state calculation unit 404 (calculation unit), a timer 405, a normal operation control unit 410, a capacity recovery control unit 412 (discharge control unit), and an operation mode selecting unit 420.

The operation mode selecting unit 420 selects either a normal mode Mn (first operation mode) or a capacity recovery mode Mr (second operation mode), as an operation mode of the control device 500. The operation mode may be selected by a user's manual operation or may be selected according to the state of the battery pack 510. The normal mode Mn is an operation mode in which the battery pack 510 performs normal charging and discharging. The capacity recovery mode Mr is an operation mode in which capacity recovery control is carried out on some or all of the battery cells 10-11 to 10-33 (see FIG. 4).

The battery state acquiring unit 400 receives measurement signals from the battery pack 510, the ammeter 551, the voltmeter 552, and the like shown in FIG. 5, and outputs measurement values, such as detected voltage values and current values, to the battery state determining unit 401. The timer 405 acquires various pieces of time information, such as a charging time and a discharging time of the battery pack 510.

The storage unit 403 stores various pieces of information, and when necessary, supplies stored information to the battery state determining unit 401, the battery state calculation unit 404, and the like. The stored information includes the following information.
- Correspondence table indicating a corresponding relation between the cell voltage V and a charging rate (or electricity amount) of the battery cell 10.
- Initial capacity of the battery cell 10.
- Information inputted from the battery state determining unit 401.

The battery state determining unit 401 acquires various states of the battery pack 510, based on various measurement values inputted from the battery state acquiring unit 400 and time information supplied from the timer 405. The acquired states includes an amount of electricity of each battery cell 10 in the battery pack 510. In addition, the battery state determining unit 401 stores a battery voltage Ev and cell voltages V11 to V33 in the storage unit 403, the battery voltage Ev and cell voltages V11 to V33 being association with the current time. The storage unit 403 thus stores time-series information on the battery voltage Ev and the cell voltages V11 to V33.

The battery state determining unit 401 compares various determination values inputted from the battery state calculation unit 404 with various collation values inputted from the storage unit 403. The battery state determining unit 401 then determines a state of the battery pack 510, and outputs the result of the determination to the normal operation control unit 410 and to the capacity recovery control unit 412.

The battery state calculation unit 404 properly corrects an acquired measurement value and initial value, calculates a physical quantity for determining a battery state, and outputs the calculated physical quantity to the battery state determining unit 401. Specifically, a battery charging rate is calculated from a correspondence table indicating a corresponding relation between a battery voltage and a battery charging rate, the correspondence table being stored in the storage unit 403, and from a battery voltage inputted from the battery state determining unit 401, and the calculated battery charging rate is outputted to the battery state determining unit 401. In addition, the current value and the application time of a discharge pulse are calculated from the battery voltage and the initial capacity of the battery that is stored in the storage unit 403, and the calculated current value and application time are outputted to the battery state determining unit 401.

A method of calculating the battery charging rate is not limited to the method shown above. The state of charge of the battery cell can be calculated by any given method.

A configuration of the control unit 570 is not limited to the configuration shown in FIG. 7. Any configuration is applicable if it allows determining a state of the battery pack 510, allows applying a specific discharge current to the battery pack 510 for a specific time, and allows keeping the battery in an open circuit state.

### [Operations in Embodiment]

### <Selecting Operation Mode>

In FIG. 7, the operation mode selecting unit 420 selects either the normal mode Mn or the capacity recovery mode Mr as the operation mode of the control device 500, based on the user's operation. In addition, the operation mode selecting unit 420 can automatically select an operation mode, based not on the user's operation but on a determination result from the battery state determining unit 401. The operation mode selecting unit 420 selects the capacity recovery mode Mr when the battery state determining unit 401 determines that "capacity recovery control is necessary", and selects the normal mode Mn in other cases. The battery state determining unit 401 determines whether capacity recovery control is necessary, based on a use history of the battery pack 510, the current SOC of the battery pack 510, and the like.

### <Normal Mode Mn>

When the normal mode Mn is selected as the operation mode, the normal operation control unit 410 causes the battery pack 510 and the power grid 610 (see FIG. 5) to output/receive power to/from each other via the power converter 554. Specifically, when the battery pack 510 discharges, the normal operation control unit 410 causes the power converter 554 to convert DC power released from the battery pack 510 into AC power and supply the AC power to the power grid 610. When the battery pack 510 is charged, the normal operation control unit 410 causes the power converter 554 to convert AC power supplied from the power grid 610 into DC power and supply the DC power to the battery pack 510.

In the normal mode Mn, the normal operation control unit 410 controls discharge current from the battery pack 510 in such a way as to prevent each of the cell voltages V11 to V33 from dropping to a given lower limit voltage V_{low}. When any one of the cell voltages V11 to V33 drops below the lower limit voltage V_{low}, the switch 560 (see FIG. 5) is set off-state, which forcibly ends discharge by the battery pack 510. The lower limit voltage V_{low} is stored in the storage unit 403.

### <Capacity Recovery Mode Mr>

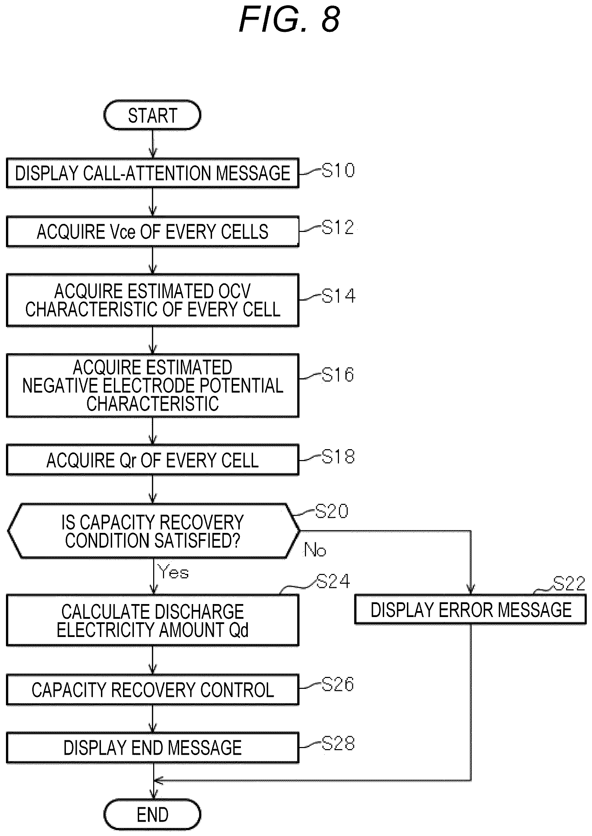

FIG. 8 is a flowchart of a capacity recovery control routine. When the operation mode is set to the capacity recovery mode Mr, the control unit 570 starts the capacity recovery control routine. It is preferable that this routine be executed at each battery module 100. For example, when the battery pack 510 has three battery modules 100-1,100-2, and 100-3 as shown in FIG. 4, this routine is executed three times. However, there may be a configuration in which capacity recovery control is carried out on all battery cells 10 included in the battery pack 510, by executing the routine only once.

When the process proceeds to step S10 in FIG. 8, the control unit 570 (see FIG. 7) causes the display 600 (see FIG. 5) to display a given call-attention message indicating that the capacity recovery control is being executed.

Subsequently, when the process proceeds to step S12, the battery state calculation unit 404 (see FIG. 7) acquires a convergence estimation value Vce for all battery cells 10 (e.g., a plurality of serially connected battery cells 10 making up one module) to be subjected to the capacity recovery control.

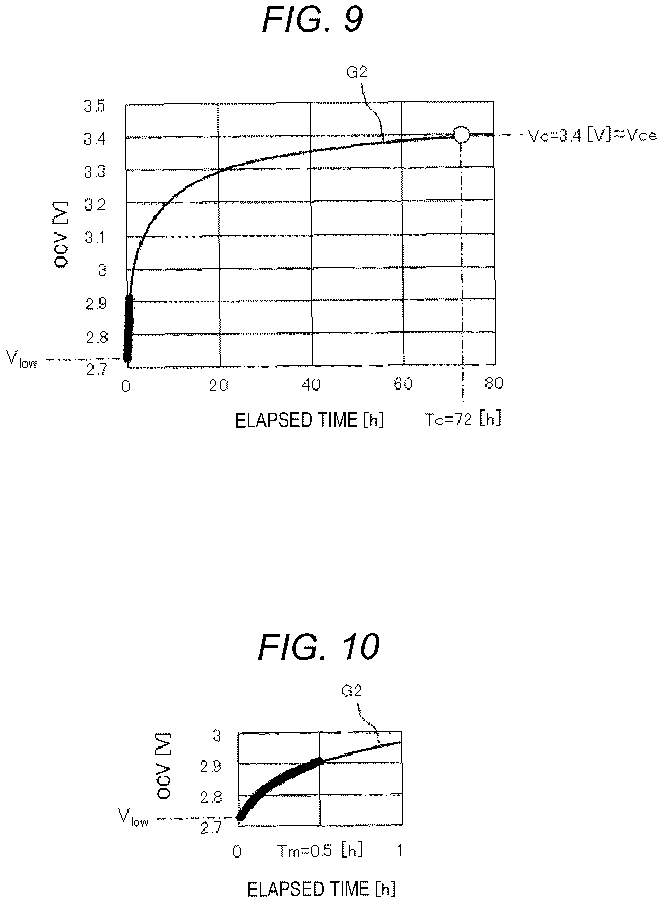

When a convergence value of an open circuit voltage (OCV) of each battery cell 10 is Vc (see FIG. 9), the convergence estimation value Vce represents an estimated value of the convergence value Vc. Subsequently, when the process proceeds to step S14, the battery state calculation unit 404 carries out a fitting process on every battery cell 10 to be processed, thus acquiring an estimated OCV characteristic. The estimated OCV characteristic is the OCV characteristic estimated with respect to a discharge amount or a charge amount of the battery cell 10.

Subsequently, when the process proceeds to step S16, the battery state calculation unit 404 acquires an estimated negative electrode potential characteristic for all battery cells 10 to be processed. The estimated negative electrode potential characteristic is a characteristic of a negative electrode potential En (see FIG. 1) that is estimated with respect to a discharge amount or a charge amount of the battery cell 10. Subsequently, when the process proceeds to step S18, the battery state calculation unit 404 acquires a remaining discharge capacity Qr for all battery cells 10 to be processed. The remaining discharge capacity Qr represents an amount of electricity that the battery cell 10 can discharge when its OCV takes the convergence value Vc (see FIG. 9). The remaining discharge capacity Qr is a capacity ranging from a current negative electrode potential to a discharge end potential, the capacity being calculated based on the estimated negative electrode potential characteristic.

Subsequently, when the process proceeds to step S20, the battery state calculation unit 404 determines whether a capacity recovery condition is satisfied. Here is an explanation of a specific example of the "capacity recovery condition". A value given by subtracting a "post-degradation capacity" of the battery cell 10 from an "initial capacity" of the same is referred to as a "degradation capacity Qdeg". The minimum of remaining discharge capacities Qr of all battery cells 10 to be processed is referred to as a "minimum remaining discharge capacity Qrmin". Qrmin/Qdeg is referred to as an expected recovery rate XR. Now the "capacity recovery condition" can be set as, for example, a condition that "the expected recovery rate XR of one or more battery cells 10 is 5% or more".

When "No" results at step S20, the process proceeds to step S22. At this step, the control unit 570 (see FIG. 7) causes the display 600 (see FIG. 5) to display a given error message indicating stoppage of the capacity recovery control, and ends the process of this routine. This is done because when it is expected that carrying out the capacity recovery control does not achieve a sufficient effect (when the expected recovery rate XR is low), stopping the capacity recovery control so as not to apply stress to the battery pack 510 is a preferable step to take.

When "Yes" results at step S20, on the other hand, the process proceeds to step S24, at which the battery state calculation unit 404 calculates a discharge electricity amount Qd. The discharge electricity amount Qd is a discharge electricity amount applied in common to the plurality of battery cells 10. Specifically, the discharge electricity amount Qd is defined as a value given by multiplying the minimum remaining discharge capacity Qrmin by a given safety factor α (where 0<α ≤ 1).

Subsequently, when the process proceeds to step S26, the capacity recovery control unit 412 executes the capacity recovery control. Details of step S26 will be described later. When the capacity recovery control ends, the battery pack 510 is charged until the cell voltage V of every battery cell 10 exceeds the lower limit voltage V_{low}, and then the process proceeds to step S28. At this step, the control unit 570 (see FIG. 7) causes the display 600 (see FIG. 5) to display a given end message indicating the end of the capacity recovery control, and ends the process of this routine.

### (Details of S12)

Hereinafter, some of the above-described steps will be described in detail. First, a process of acquiring the convergence estimation value Vce at the above step S12 will be described in detail.

FIG. 9 is a diagram showing an example of a graph G2 representing the OCV characteristic of the battery cell 10, and FIG. 10 is an enlarged view of the graph G2.

In FIGS. 9 and 10, the horizontal axis represents an elapsed time (expressed in hours) from a pause start point immediately after discharging, and the vertical axis represents the cell voltage V (OCV). "Pause" means an operation of keeping the battery cell in an open circuit state.

At the pause start point (elapsed time=0) in FIGS. 9 and 10, the SOC is 0% and the OCV is equal to the lower limit voltage V_{low} (about 2.75 [V] in the example of FIGS. 9 and 10). The SOC at the pause start point (elapsed time=0) is not limited to 0% and may be set to any given value. Likewise, the OCV at the pause start point (elapsed time=0) is not limited to the lower limit voltage V_{low} and may be set to any given voltage equal to or higher than the lower limit voltage V_{low} .

When a pause time gets sufficiently longer, the OCV converges to a constant value, as indicated in the graph G2. The OCV at its convergence point is referred to as the convergence value Vc, and a timespan from time t0 to the point of the OCV's convergence to the convergence value Vc is referred to as a convergence pause time Tc. In the example of FIG. 9, the convergence pause time Tc is 72 hours and the convergence value Vc is about 3.4 [V].

The convergence value Vc varies depending on a state of degradation of the battery cell 10, but the shape of the graph G2, which is the OCV characteristic, does not vary much depending on the state of degradation of the battery cell 10. The convergence value Vc, therefore, can be estimated by obtaining the shape of the graph G2 in advance, measuring a change in the OCV during a relatively short measurement time Tm, and fitting the result of the measurement to the shape of the graph G2 obtained in advance. In the example of FIG. 10, a time segment of "30 minutes" in which the graph G2 is indicated by a thick solid line is the measurement time Tm. The estimated value of the convergence value Vc is referred to as the convergence estimation value Vce. Thus, the process of step S12 is the process of measuring the OCV during the measurement time Tm and calculating the convergence estimation value Vce, based on the result of OCV measurement.

Although the measurement time Tm is determined to be 30 minutes in the above example, the measurement time Tm may not be 30 minutes. It is nevertheless preferable that the measurement time Tm be equal to or longer than 30 minutes. The longer the measurement time Tm is, the higher the accuracy of fitting becomes. In addition, the shorter the measurement time Tm is, the shorter the time required for obtaining the convergence estimation value Vce becomes. The convergence pause time Tc is not limited to 72 hours. It is preferable that the convergence pause time Tc be equal to or longer than 20 hours.

The shape of the graph G2 used for fitting may be obtained from actual measurements of the OCV of the battery cell 10 or from actual measurements of the OCV of a cell equal in material makeup to the battery cell 10. The convergence estimation value Vce may be obtained by fitting an arbitrarily chosen function (e.g., an exponential function, a logarithmic function, a quadratic function, etc.) to the graph G2 in the range of the measurement time Tm. It is not always necessary to obtain the convergence estimation value Vce. The convergence value Vc actually measured may be used in place of the convergence estimation value Vce.

In the above example, a pause state immediately after discharging is shown exemplarily. However, in a pause state immediately after charging, the convergence estimation value Vce may be obtained by the same process as described above. In such a case, the graph G2 has a downwardly convex shape.

### (Details of S14)

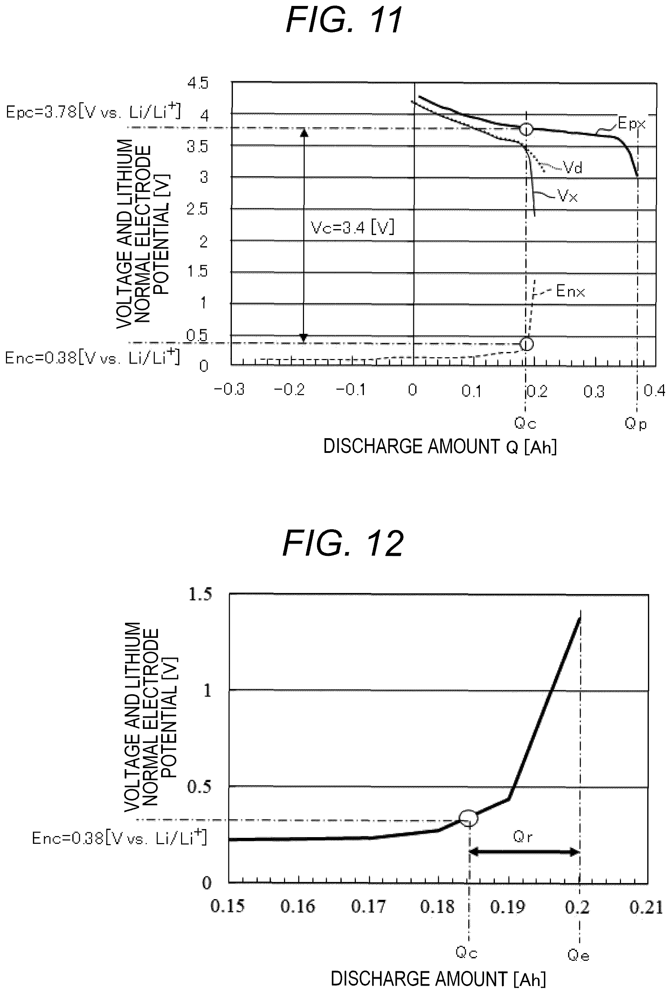

FIG. 11 is a diagram showing an example of a potential characteristic and the like of the battery cell 10. Specifically, FIG. 11 shows an example of a relationship between a cell voltage characteristic Vx, a positive electrode potential characteristic Epx, a negative electrode potential characteristic Enx, and a measured voltage characteristic Vd.

In FIG. 11, the vertical axis represents the voltage and the lithium normal electrode potential. The horizontal axis represents the discharge amount Q [Ah], where a value "0 " represents a fully charged state and a negative value represents an overcharged state. The negative electrode potential characteristic Enx and the positive electrode potential characteristic Epx shown in FIG. 11 are a result of plotting the negative electrode potential En and the positive electrode potential Ep (see FIG. 1), which are measured in advance by using a negative electrode active material and a positive electrode active material with Li metals working as reference electrodes, respectively, the negative electrode active material and positive electrode active material being used in the battery cell 10.

A discharge amount at a discharge end of the positive electrode potential characteristic Epx is Qp. The cell voltage characteristic Vx is obtained by subtracting the negative electrode potential characteristic Enx from the positive electrode potential characteristic Epx. For example, the value of the cell voltage characteristic Vx at a discharge amount Qc is equal to the convergence value Vc=3.4 [V] (see FIG. 9), and the difference between the positive electrode potential characteristic Epx and the negative electrode potential characteristic Enx is also equal to 3.4 [V] at the discharge amount Qc. The value of the positive electrode potential characteristic Epx at the discharge amount Qc and the value of the negative electrode potential characteristic Enx at the same are referred to as a positive electrode potential Epc and a negative electrode potential Enc, respectively. In the example of FIG. 11, the positive electrode potential Epc and the negative electrode potential Enc are 3.78 [V vs. Li/Li⁺] and 0.38 [V vs. Li/Li⁺], respectively, with respect to a lithium normal electrode potential.

Any given method is adopted to acquire the measured voltage characteristic Vd shown in FIG. 11. For example, any one of the following methods is adopted. A first method is to acquire the measured voltage characteristic Vd by charging or discharging at a low C (capacity) rate. Discharging at a low C rate reduces electrochemical polarization caused by resistance. As a result, the measured voltage characteristic Vd can be acquired in a pseudo manner. It is preferable that the low C rate mentioned here be equal to or lower than 0.5 C. A second method is to plot Vc against charge amounts or discharge amounts. Charge amounts or discharge amounts are stored in advance and a plurality of Vc points for the charge amounts or discharge amounts are obtained. By this approach, the measured voltage characteristic Vd can be acquired. A third method is to reproduce the measured voltage characteristic Vd by calculations, from charge/discharge data. According to this method, for example, electrochemical polarization caused by the internal resistance of the battery is calculated from charge/discharge data, using an equivalent circuit of the battery, and an open circuit voltage is estimated from a voltage at the time of energization. It should be noted that an SOC range in which the measured voltage characteristic Vd is acquired is not limited to 0% to 100%.

A fitting process is carried out such that the cell voltage characteristic Vx matches the measured voltage characteristic Vd. While a detailed description of the fitting process is made in the above PTL 2, the fitting process is summarized as follows. First, by shifting and expanding the negative electrode potential characteristic Enx and the positive electrode potential characteristic Epx in the direction of the horizontal axis, a shift amount and an expansion/contraction ratio at which the cell voltage characteristic Vx most approximates to the measured voltage characteristic Vd are obtained. The cell voltage characteristic Vx obtained by this process is equivalent to an "estimated OCV characteristic". While the horizontal axis represents the "discharge amount" in this case, the horizontal axis may represent the charge amount. In this case, a value "0" represents a fully discharged state (SOC 0%), and a negative value represents an overdischarged state.

FIG. 12 is a partially enlarged view of the negative electrode potential characteristic Enx.

At the above step S14, the battery state calculation unit 404 calculates the positive electrode potential Epc and the negative electrode potential Enc that correspond to the convergence value Vc, by the above fitting process. For example, in the example of FIG. 11, the positive electrode potential Epc and the negative electrode potential Enc at the convergence value Vc=3.4 [V] are 3.78 [V vs. Li/Li⁺] and 0.38 [V vs. Li/Li⁺], respectively, with respect to the lithium normal electrode potential.

### (Details of S18)

In FIG. 12, a potential at the discharge capacity Qc is 0.38 [V vs. Li/Li⁺]. In FIG. 12, a discharge amount at an end is denoted as Qe. Now the difference between the discharge capacity Qc and the discharge capacity Qe corresponds to an upper limit capacity that can be recovered, which represents a remaining discharge capacity Qr of the battery cell 10.

### (Details of S26)

Details of the capacity recovery control carried out at step S26 will then be described. The capacity recovery control according to this embodiment is the control by which a process of "causing the battery module 100 or the battery pack 510 to discharge at a given discharging rate RT and to stop discharging for a given pause period" is defined as "one turn of process" and this "one turn of process" is repeated multiple (n) times. It is preferable that the discharging rate RT be within a range of 1C to 10C. "The discharging rate of 1C" means a current density at which the battery capacity is reduced to zero by discharging in one hour. At step S26, the capacity recovery control unit 412 determines the discharging rate RT and the number of times of repetition n, based on the discharge electricity amount Qd obtained at step S24, and causes the battery module 100 or the battery pack 510 to discharge, based on the determined discharging rate RT and number of times of repetition n.

When the operation mode is set to the capacity recovery mode Mr, the control unit 570 may carry out control by which the battery module 100 or the battery pack 510 keeps discharging even when any one of the cell voltages V11 to V33 has reached the given lower limit voltage V_{low}. Specifically, even when the cell voltage has reached the lower limit voltage of the battery cell in the normal mode, use and operation of equipment running on discharge current from the battery module 100 or the battery pack 510 are permitted and the battery cell is caused to keep discharging. This puts the battery cell into the overdischarge state. Putting the battery cell into the overdischarge state offers a capacity recovery effect. Even in this case, the step at which the battery state calculation unit 404 calculates the discharge electricity amount Qd can be executed.

When the operation mode is set to the capacity recovery mode Mr and discharging is continued even after the cell voltages V11 to V33 each reach the given lower limit voltage V_{low}, the control unit 570 stops discharging by the battery module 100 or the battery pack 510 when any one of the cell voltages V11 to V33 has reached a given lowest limit voltage V_{low_limit}. This prevents degradation of the battery cell. The lowest limit voltage Vlow_limit may be any given value if it is lower than the lower limit voltage Vlow. Preferably, however, the lowest limit voltage Vlow_limit is calculated by step S15 described below.

### (Details of S15)

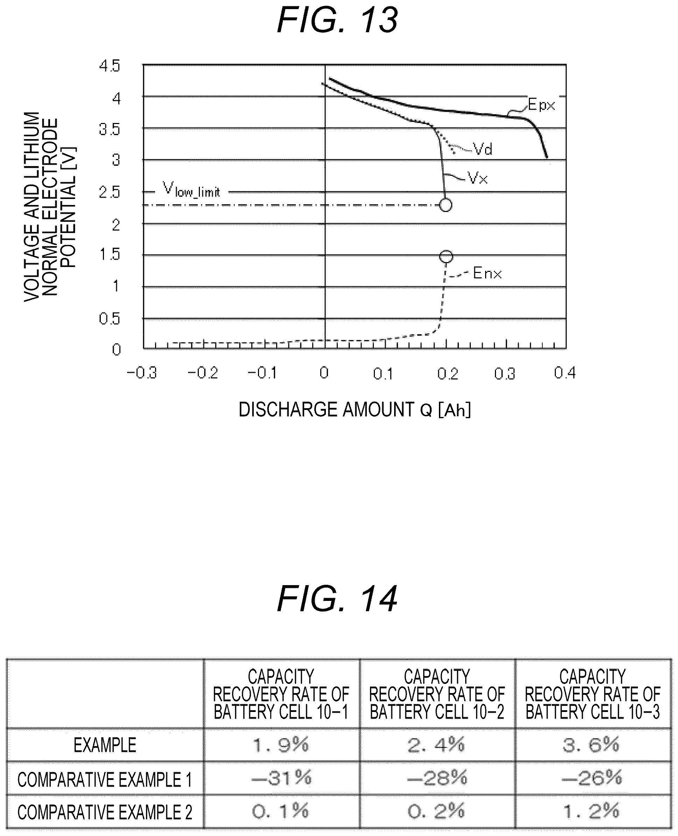

FIG. 13 is another diagram showing an example of the potential characteristic and the like of the battery cell 10.

Specifically, FIG. 13 shows an example of the relationship between the cell voltage characteristic Vx, the positive electrode potential characteristic Epx, the negative electrode potential characteristic Enx, and the measured voltage characteristic Vd.

The lowest limit voltage Vlow_limit of the battery cell 10 is obtained as a value of the cell voltage characteristic Vx that corresponds to a discharge amount Q indicating the maximum of the negative electrode potential characteristic Enx. Because each cell has the lowest limit voltage Vlow_limit different from that of another cell, the lowest limit voltage Vlow_limit should preferably be calculated for every cell.

### [Example]

FIG. 14 is a table showing capacity recovery rates in an example and various comparative examples.

First, the example shown in FIG. 14 is the example in which capacity recovery is performed on the configuration shown in FIG. 3, according to the procedure of the above-described embodiment. Capacity retention ratios of the cell 10-1, the cell 10-2, and the cell 10-3 are 85%, 80%, and 75%, respectively, which indicates that the cell 10-3 has degraded most. In the example, the remaining discharge capacities of the cells 10-1 to10-3 are calculated, and the minimum of the remaining discharge capacities is multiplied by the safety factor to obtain the discharge electricity amount. The measurement time Tm for measuring the OCV (see FIG. 10) is "30 minutes", and the safety factor α is "0.5". In addition, the discharging rate RT at step S26 (capacity recovery control) is determined to be "6C", the number of divided portions of discharge pulses is determined to be "4", and a pause time between cycles of discharge pulses is determined to be "15 minutes". As shown in FIG. 14, according to this example, a capacity recovery effect has been achieved at all the battery cells 10-1,10-2, and 10-3 without causing their excessive recovery.

In a comparative example 1, the battery module equal in configuration and degree of degradation to the battery module of the example is subjected to capacity recovery. Respective discharge end capacity shifts (Qp-Qc in FIG. 11) of the battery cells 10-1 to 10-3 are calculated, and the electricity amount corresponding to the minimum of the discharge capacity end shifts is overdischarged. In the comparative example 1, all the battery cells 10-1 to 10-3 have ended up in an excessive recovery state and consequently their capacities have dropped significantly.

In a comparative example 2, the battery cells 10-1 to 10-3 are caused to discharge such that only the cell voltage V3 (see FIG. 3) of the battery cell 10-3 becomes lower than the lower limit voltage V_{low} as the cell voltages V1 and V2 of the other battery cells 10-1 and 10-2 become equal to or higher than the lower limit voltage V_{low}. More specifically, in the example of FIG. 14, after the cell voltage V3 of the battery cell 10-3 drops below the lower limit voltage V_{low}, discharging is stopped at a point of time at which the cell voltage V2 of the battery cell 10-2 reaches the lower limit voltage V_{low}. In the comparative example 2, excessive recovery does not occur but the electricity amount of overdischarged electricity is small, in which case the recovery effect is limited. In other words, in the example of FIG. 14, almost no recovery effect is observed at the battery cells 10-1 and 10-2. In this manner, according to this example, the battery module 100 or the battery pack 510 as a whole offers a large recovery effect, compared with the comparative examples 1 and 2.

### [Effects of Embodiment]

As described above, according to the above embodiment, a secondary battery control device (500) includes: a calculation unit (404) having a function of acquiring a positive electrode potential characteristic and a negative electrode potential characteristic of a battery cell 10 included in a secondary battery (100, 510), based on an open circuit voltage characteristic of the battery cell 10, a function of acquiring a remaining discharge capacity Qr ranging from a current negative electrode potential to a discharge end potential, based on the negative electrode potential characteristic, and a function of determining a discharge electricity amount Qd that is an amount of electricity to be discharged, based on the remaining discharge capacity Qr; and a discharge control unit (412) that causes the secondary battery (100, 510) to discharge electricity in an amount equal to the discharge electricity amount Qd. Because of this, the discharge electricity amount Qd can be determined based on the remaining discharge capacity Qr. Hence the capacity of the secondary battery (100,510) can be recovered properly.

It is more preferable that the secondary battery (100,510) include a plurality of battery cells 10 connected in series and that the calculation unit (404) obtain respective remaining discharge capacities Qr of the plurality of battery cells 10 and determine the discharge electricity amount Qd, based on the minimum of the remaining discharge capacities Qr. As a result, the discharge electricity amount Qd can be determined based on the battery cell 10 with the minimum remaining discharge capacity Qr. Hence degradation of the battery cell 10 can be suppressed and the capacity of the secondary battery (100,510) can be recovered more properly.

It is more preferable that the calculation unit (404) calculate the discharge electricity amount Qd by multiplying the remaining discharge capacity Qr by a given safety factor α. As a result, even when a calculation error or the like occurs, degradation of the battery cell 10 can be suppressed, and therefore the capacity of the secondary battery (100,510) can be recovered more properly.

It is more preferable that discharge control unit (412) calculate a time required for discharging at a given discharging rate RT and cause a current of the discharge electricity amount Qd to flow through the secondary battery (100,510) in the form of divided portions of discharge pulses that are released multiple times. This enhances a capacity recovery effect while suppressing overheating of the battery cell 10. The discharging rate can be determined to be, for example, 1C or more and 10C or less. The number of divided portions, which can be set arbitrarily, may be, for example, four or more. The pause time of divided portions of discharge pulses to be released n times may be, for example, 30/n minutes to 120/n minutes.

It is more preferable that the discharge control unit (412) cause a current of the discharge electricity amount Qd to flow through the secondary battery (100,510) on condition that the remaining discharge capacity Qr is equal to or larger than a given value (for example, an expected recovery rate XR is 5% or more). As a result, when it is expected that carrying out capacity recovery control does not offer much effects, the capacity recovery control can be aborted.

### [Modifications]

The present invention is not limited to the above embodiment and can be modified into various forms. The above embodiment has been described exemplarily for easy understanding of the present invention, and is not necessarily limited to an embodiment including all constituent elements described above. Other constituent elements may be added to constituent elements of the above embodiment, and some of constituent elements of the embodiment may be replaced with other constituent elements. A group of control lines and data lines considered to be necessary for description are illustrated in drawings, and all control lines and data lines the product needs are not necessarily illustrated. It is safe to assume that, actually, almost the entire constituent elements are interconnected. Possible modifications of the above embodiment are, for example, as follows.

(1) In the above embodiment, the control unit 570 as a piece of hardware can be provided as an ordinary computer. Because of this, programs or the like for executing various processes described above may be stored in a storage medium or distributed via a transmission path.
(2) In the above embodiment, the above processes have been each described as a software-based process using a program. However, some or all of these processes may be replaced with hardware-based processes using an application specific integrated circuit (ASIC), a field programmable gate array (FPGA), or the like.
(3) Various processes executed in the above embodiment may be executed by a server computer via a network (not illustrated), and various pieces of data stored in the above embodiment may be stored in the server computer as well.

### Reference Signs List

10 battery cell
100 battery module (secondary battery)
404 battery state calculation unit (calculation unit)
412 capacity recovery control unit (discharge control unit)
500 control device (secondary battery control device)
510 battery pack (secondary battery)
α safety factor
Qd discharge electricity amount
Qr remaining discharge capacity
RT discharging rate
SY secondary battery system

## Claims

1. A secondary battery control device comprising:
a calculation unit having a function of acquiring a positive electrode potential characteristic and a negative electrode potential characteristic of a battery cell included in a secondary battery, based on an open circuit voltage characteristic of the battery cell, a function of acquiring a remaining discharge capacity ranging from a current negative electrode potential to a discharge end potential, based on the negative electrode potential characteristic, and a function of determining a discharge electricity amount that is an amount of electricity to be discharged, based on the remaining discharge capacity; and
a discharge control unit that causes the secondary battery to discharge electricity in an amount equal to the discharge electricity amount.

2. The secondary battery control device according to claim 1, wherein
the secondary battery includes a plurality of the battery cells, and
the calculation unit obtains respective remaining discharge capacities of the plurality of the battery cells, and determines the discharge electricity amount, based on a minimum of the remaining discharge capacities.

3. The secondary battery control device according to claim 2, wherein the secondary battery includes a plurality of the battery cells connected in series.

4. The secondary battery control device according to claim 2, wherein the calculation unit calculates the discharge electricity amount by multiplying the remaining discharge capacity by a given safety factor.

5. The secondary battery control device according to claim 4, wherein the discharge control unit causes a current of the discharge electricity amount to flow through the secondary battery in a form of divided portions of discharge pulses to be released multiple times, the discharge pulses having a given discharging rate.

6. The secondary battery control device according to claim 5, wherein the discharge control unit causes a current of the discharge electricity amount to flow through the secondary battery on condition that the remaining discharge capacity is equal to or larger than a given value.

7. The secondary battery control device according to claim 1, further comprising an operation mode selecting unit that selects either a first operation mode or a second operation mode as an operation mode, wherein
in a case where the operation mode selecting unit selects the first operation mode, the discharge control unit stops discharging by the secondary battery when a terminal voltage of the secondary battery becomes lower than a given voltage, and
in a case where the operation mode selecting unit selects the second operation mode, the discharge control unit continues discharging by the secondary battery even if the terminal voltage of the secondary battery is lower than the given voltage.

8. A secondary battery control device that controls a secondary battery incorporated in equipment, the secondary battery control device comprising:
an operation mode selecting unit that selects either a first operation mode or a second operation mode as an operation mode;
a first discharge control unit that in a case where the operation mode selecting unit selects the first operation mode, stops discharging by the secondary battery when a terminal voltage of the secondary battery becomes lower than a given voltage; and
a second discharge control unit that in a case where the operation mode selecting unit selects the second operation mode, continues discharging by the secondary battery even if the terminal voltage of the secondary battery is lower than the given voltage, thereby allowing the equipment to operate.

9. The secondary battery control device according to claim 8, wherein the second discharge control unit uses a lowest limit voltage as a reference voltage, the lowest limit voltage being lower than the given voltage serving as a reference voltage for stopping discharging in the first operation mode, and when a terminal voltage of the secondary battery becomes lower than the lowest limit voltage, stops discharging by the secondary battery.

10. The secondary battery control device according to claim 9, further comprising a calculation unit having a function of acquiring a positive electrode potential characteristic and a negative electrode potential characteristic of a battery cell included in the secondary battery, based on an open circuit voltage characteristic of the battery cell, and a function of acquiring a cell voltage at a discharge amount corresponding to a discharge end of a negative electrode, as the lowest limit voltage, based on the negative electrode potential characteristic.

11. A secondary battery system comprising:
a secondary battery including a plurality of battery cells;
a calculation unit having a function of acquiring a positive electrode potential characteristic and a negative electrode potential characteristic of a battery cell included in the secondary battery, based on an open circuit voltage characteristic of the battery cell, a function of acquiring a remaining discharge capacity ranging from a current negative electrode potential to a discharge end potential, based on the negative electrode potential characteristic, and a function of determining a discharge electricity amount that is an amount of electricity to be discharged, based on the remaining discharge capacity; and
a discharge control unit that causes the secondary battery to discharge electricity in an amount equal to the discharge electricity amount.
